# EUROPEAN PATENT APPLICATION

(11) **EP 3 505 358 A1**
(43) Date of publication of application: **03.07.2019**
(21) Application number: 19152586.4
(22) Date of filing: 10.01.2018
(51) Int. Cl.: B41M 5/333, C08G 63/08, C08G 63/91, C09D 167/04, C08L 67/04, B41M 5/323

(54) **NOVEL COLOUR DEVELOPER FOR A THERMO-SENSITIVE RECORDING MEDIUM**

(30) Priority: 10.01.2017 EP 17150842; 13.11.2017 EP 17201462
(62) Divisional of application: 18700648.1
(71) Applicant: Mitsubishi HiTec Paper Europe GmbH, 33699 Bielefeld (DE)
(72) Inventor: BECERRA SIABATO, Diana Valentina, 33602 Bielefeld (DE); WILKE, Nora, 24943 Flensburg (DE); NEUKIRCH, Matthias, 24943 Flensburg (DE); JANSEN, Martinus Adrianus Gertrudus, 4206AC Gorinchem (NL); MICHEL, Armin Johannes, 3825 JL Amersfoort (NL)
(74) Representative: Eisenführ Speiser

(57) **Abstract**

The present invention provides an agent capable of reacting with a leuco dye upon heating, wherein said agent meets Formula (A-I): 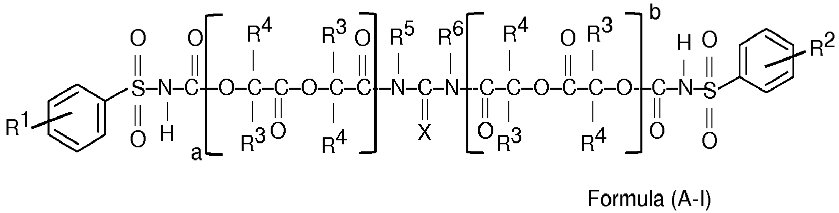 wherein: R1 and R2 are independently a hydrogen atom, a C1-C6 alkyl group, a C1-C6 alkoxy group or a halogen atom; R3, R4, R5 and R6 are independently a hydrogen atom, a C1-C6 alkyl group, a C3-C6 cycloalkyl group or a C2-C6 alkenyl group; X is O, S or NH; and, a and b are integer values meeting the conditions a ≥ 0, b ≥ 0 and (a+b) ≥ 1. The present invention also provides a thermosensitive recording medium having a colour developing layer comprising: a leuco dye; and, a colour developer which reacts with said leuco dye upon heating to form a colour layer, wherein said colour developer comprises an agent meeting said Formula (A-I). The present invention also relates to a coating composition for forming a heat-sensitive recording material or heat-sensitive recording layer, comprising one or more dye precursors and one or more colour developers based on lactic acid units, and also to a coating colour for forming a coating composition or a heat-sensitive recording layer, comprising one or more dye precursors and one or more colour developers based on lactic acid units, and further to a heat-sensitive recording material comprising a supporting substrate and a heat-sensitive recording layer of the invention, and also to a method of forming this heat-sensitive recording material and to the use of this heat-sensitive recording material. The present invention here also relates to such a coating composition or heat-sensitive recording layer as further contains at least one further colour developer not based on lactic acid units. The invention lastly also relates to a compound based on lactic acid units, preferably for use as a colour developer in the above context, to such a use itself, and to a method of forming this compound based on lactic acid units.

## Description

### Technical Field

The present invention is directed to an agent which is capable, upon heating, of reacting with a leuco dye in a colour-forming manner. More particularly, the present invention is directed to a colour developer which comprises an agent which is a macromolecular compound comprising a terminal sulfonyl group, a urea group and a linking group there-between. The colour developer is suitable for inclusion in the colour developing layer of a thermo-sensitive recording medium.

### Background to the Invention

The colour developing layer (5) comprises at least i) a colour developer which is usually a weak acid and which donates a proton under the action of heat to ii) a colour former, which is an initially light-coloured or colourless compound but which can change colour with the addition of said proton. The colour developer should have an appropriate melting point to react at the temperatures generated by the thermal head (7) of the printer but should equally be thermally stable at lower temperatures. It will be appreciated that there are also functional constraints on the acidity (pKa value) and solubility of such colour developers, as well as the common, practical need for the colour developer to be of improved economics given the large scale of its application.

Well established colour developers include: Bisphenol A; Bisphenol F; Bisphenol AP; Bisphenol S; 4-hydroxy-4'-isopropoxydiphenylsulfones; bis-(3-allyl-4-hydroxyphenyl)sulfone; phenol-4-[[4-(2-propen-1-yloxy)phenyl]sulfonyl]; 1,7-bis(4-hydroxyphenylthio)-3,5-dioxa-heptane; and, the phenol,4,4'-sulfonylbispolymer with 1,1'-oxybis[2-chloroethane] (CAS Number 191680-83-8, D90).

The U.S. Environmental Protection Agency has documented its concerns over the use of bisphenols - in particular Bisphenol A - in thermal recording media and, particular, thermal paper and in the waste paper streams and recycled paper derived therefrom (BPA as a Developer in Thermal Paper and Alternatives: Identifying Alternative Developers, US Environmental Protection Agency (EPA), 15th July 2010). A need to find viable alternatives to these bisphenols is therefore clearly apparent, with this EPA reference mooting the use of inter alia palygorskite, attapulgite, halloysite, kaolin, colloidal silica and phenolic novolac resins. Palygorskite or attapulgite are a magnesium aluminium phyllosilicate with formula (Mg,Al)₂Si₄O₁₀(OH)·4(H₂O) that occurs in a type of clay soil, for example, common to the Southeastern United States. Halloysite is an aluminosilicate clay mineral with the empirical formula Al₂Si₂O₅(OH)₄. Its main constituents are aluminium (20.90%), silicon (21.76%) and hydrogen (1.56%). Halloysite typically forms by hydrothermal alteration of alumino-silicate minerals. It can occur intermixed with other clay minerals, for example, kaolinite.

Further alternatives to bisphenols have also been disclosed in the art. For instance: US 2003/0040434 A1 (Fujita et al.) and Japanese Patent Unexamined Publications (JP-Kokai) Hei 5-147357 (JP H05-147357 A) and Hei 5-32601 (JP H05-32601 A / US 4,535,176 A) disclose the use, as colour developers, of sulfonylurea compounds; aminobenzene sulfonamide derivatives are disclosed in JP H08-59603 (JP H08-59603 A / EP 0 693 386 A1); and, diphenyl sulfone crosslinked compounds are described in WO 97/16420 (WO 1997016420 A1).

US 2014/0235437 A1 (Mitsubishi HiTec Paper Europe GmbH) discloses a colour acceptor for chemical reaction with a dye precursor to form a visually recognizable colour: the colour acceptor is constructed of lactic acid monomers. This citation also discloses a heat-sensitive recording material with a substrate and a heat-sensitive recording layer, wherein the heat-sensitive recording layer contains at least one dye precursor and at least one colour acceptor - which compounds react with one another in a colour-forming manner when heat is applied - and wherein the colour acceptor is constructed of lactic acid monomers.

The invention aims at providing one or more alternative colour developers having improved properties, which enable them to react with a leuco dye under optimized conditions.

### Statement of the Invention

In accordance with a first aspect of the invention, there is provided an agent capable of reacting with a leuco dye upon heating, wherein said agent meets Formula (A-I): 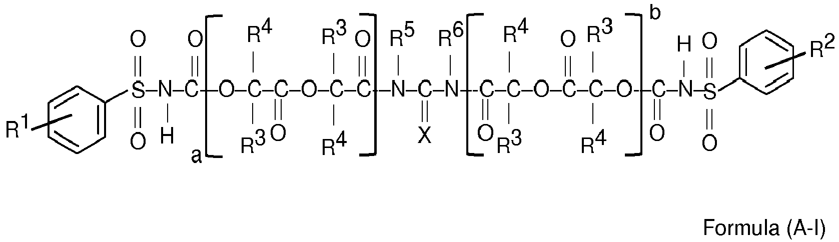 wherein:
R1 and R2 are independently a hydrogen atom, a C1-C6 alkyl group, a C1-C6 alkoxy group or a halogen atom;
R3, R4, R5 and R6 are independently a hydrogen atom, a C1-C6 alkyl group, a C3-C6 cycloalkyl group or a C2-C6 alkenyl group;
X is O, S or NH; and,
a and b are integer values meeting the conditions a ≥ 0, b ≥ 0 and (a+b) ≥ 1.

Without intention to limit the present invention, the parameter (a+b) of Formula (A-I) will generally meet the condition 1 ≤ (a+b) ≤ 40. In an alternative expression, the molecular weight of the agent of Formula (A-I) should generally be 8000 or less, for example 6000 or less.

In an embodiment of the agent of Formula (A-I), R1, R2, R3, R4, R5 and R6 are independently a hydrogen atom or a C1-C3 alkyl group. Preferably, R3 and R4 are independently a hydrogen atom or a methyl group and more preferably R3 is H and R4 is methyl.

In further embodiments of the agent of Formula (A-I), which embodiments are not intended to be mutually exclusive of one another: X is O; R1 and R2 are both methyl and are para-substituents of the phenyl group; and/or 1 ≤ a ≤ 10 and 1 ≤ b ≤ 10. In terms of the tackiness of the agent of Formula (A-I), good results have been obtained where 4 ≤ a ≤ 10 and 4 ≤ b ≤ 10.

In accordance with a second aspect of the present invention, there is provided a compound meeting Formula (A-II): 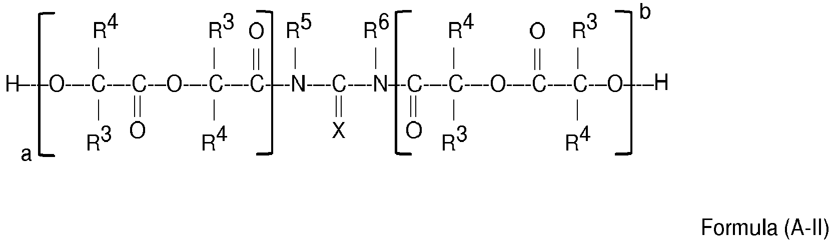 wherein:
R3, R4, R5 and R6 are independently a hydrogen atom, a C1-C6 alkyl group, a C3-C6 cycloalkyl group or a C2-C6 alkenyl group;
X is O, S or NH; and,
a and b are integer values meeting the conditions a ≥ 0, b ≥ 0 and (a+b) ≥ 1.

Importantly, the compound of Formula (A-II) may be obtained by a method comprising reacting:
i) a compound of the formula 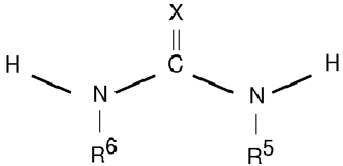 wherein:
   R5 and R6 are independently a hydrogen atom, a C1-C6 alkyl group, a C3-C6 cycloalkyl group or a C2-C6 alkenyl group; and,
   X is O, S or NH; and,
ii) a cyclic ester of a hydroxycarboxylic acid having the formula 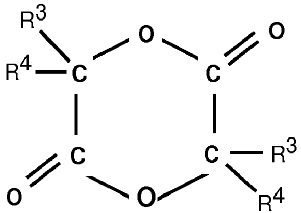 wherein:
   R3 and R4 are independently a hydrogen atom, a C1-C6 alkyl group, a C3-C6 cycloalkyl group or a C2-C6 alkenyl group.

The compound of Formula (A-II) represents an important starting material for the synthesis of the agent of Formula (A-I). More particularly, the present invention provides a method for producing the agent of Formula (A-I) as defined herein above, said method comprising the steps of:
a) providing a compound as defined in Formula (A-II); and,
b) reacting said compound with at least one sulfonyl isocyanate of Formula (A-III): 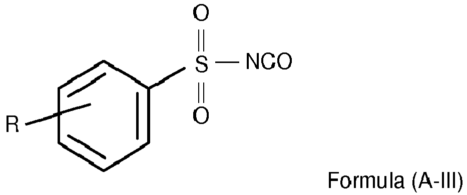 wherein:
   R is a hydrogen atom, a C1-C6 alkyl group, a C1-C6 alkoxy group or a halogen atom

The agents of Formula (A-I) are effective as developers in the colour developing layers of thermosensitive media, in particular thermal papers. They are stable at low temperatures and particularly at temperatures below 40 °C at which thermosensitive media will usually be transported and stored prior to their use. The compounds are stable in aqueous dispersion for an operable period of time, and their use is not compromised by the environmental concerns which surround the large scale use of bisphenols. In fact, it might be noted the reactants used to obtain compounds of Formula (A-II) - and thus indirectly the agents of Formula (A-I) - can be derived from compounds of biologic origin, such as urea and lactide: as a consequence, it is postulated that the agents of Formula (A-I) may be biodegradable.

In accordance with a third aspect of the invention, there is provided an aqueous dispersion comprising the agent of Formula (A-I) as defined above. In such an aqueous dispersion, it is preferred that the average particle size of the agent is less than 20 microns, for instance from 0.5 to 10 microns, as measured by dynamic light scattering.

In accordance with a fourth aspect of the present invention, there is provided a thermosensitive recording medium having a colour developing layer comprising; a leuco dye; and, a colour developer which reacts with said leuco dye upon heating to form a colour layer, wherein said colour developer comprises an agent as defined herein before and in the appended claims.

Typically, the leuco dye of the thermosensitive medium is selected from the group consisting of: triphenylmethanephthalide leuco compounds; triallylmethane leuco compounds; fluoran leuco compounds; phenothiazine leuco compounds; thiofluoran leuco compounds; xanthene leuco compounds; indophthalyl leuco compounds; spiropyran leuco compounds; azaphthalide leuco compounds; couromeno-pyrazole leuco compounds; methine leuco compounds; rhodamineanilino-lactam leuco compounds; rhodaminelactam leuco compounds; quinazoline leuco compounds; diazaxanthene leuco compounds; bis-lactone leuco compounds; and, mixtures thereof. In an important embodiment, the colour developing layer comprises a fluoran leuco dye.

The present invention also provides a method of producing a thermo-sensitive recording medium comprising the steps of: a) providing a preferably planar substrate; b) applying an aqueous coating composition to said substrate, said aqueous coating composition comprising a leuco dye and a dispersed developer which reacts with said leuco dye upon heating; and, c) forming a coating layer by drying the applied aqueous coating composition at a temperature below the minimum reaction temperature of the developer and the leuco dye, wherein said developer comprises the agent as defined above. Typically the substrate will comprise paper. Further, said method may be characterized in that the applied coating composition has a solids content of from 35 to 50 wt.%.

### Definitions

The terms "comprising", "comprising", "comprises" and "comprised of" as used herein are synonymous with "including", "includes", "containing" or "contains": the terms should be understood to mean that the list following is non-exhaustive and may or may not include any other additional suitable items, for example one or more further feature(s), component(s), ingredient(s) and/or substituent(s) as appropriate.

As used herein, "and/or" refers to and encompasses any and all possible combinations of one or more of the associated listed items.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "preferred" and "preferably" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

As used herein, "C1-C6 alkyl" group refers to a monovalent group that contains 1 to 6 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; and, n-hexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-4 carbon atoms (C1-C4 alkyl) - for example unsubstituted alkyl groups containing from 1 to 3 carbon atoms (C1-C3 alkyl) - should be noted.

As used herein, "C2-C6 alkenyl" group refers to an aliphatic carbon group that contains 2 to 6 carbon atoms and at least one double bond. Like the aforementioned alkyl group, an alkenyl group can be straight or branched, and may optionally be substituted. Examples of C2-C6 alkenyl groups include, but are not limited to: allyl; isoprenyl; 2-butenyl; and, 2-hexenyl.

The term "C3-C6 cycloalkyl" is understood to mean a saturated, mono- or bicyclic hydrocarbon group having from 3 to 6 carbon atoms. Examples of cycloalkyl groups include: cyclopropyl; cyclobutyl; cyclopentyl; and, cyclohexyl.

The term "lactic acid" in this application refers to 2-hydroxypropionic acid with the chemical formula C₃H₆O₃ and, unless specified herein, can refer to either stereoisomeric form of lactic acid (L-lactic acid or D-lactic acid).

As used herein "lactide" (CAS 4511-42-6 and 95-96-5) refers to the cyclic diester obtained by dehydrationcondensation of two lactic acid molecules. Lactide exists as three optical isomers: L-lactide formed from two L-lactic acid molecules; D-lactide formed from two D-lactic acid molecules; and, meso-lactide formed from L-lactic acid and D-lactic acid. Where appropriate, lactoyl units of the compounds of Formulas (A-I) and (A-II) may be derived from one, two or three of said isomers. However, it is preferred for said lactoyl units to be derived from a source of lactide in which the level of meso-lactide is as low as possible and preferably for said lactide source to consist of L-lactide and/or D-lactide. In an embodiment, the lactide consists only of optically pure D-lactide or, preferably, optically pure L-lactide.

Instructive disclosures on the preparation of purified lactide include but are not limited to: US Patent No. 6,313,319 B1 (US 6,313,319 B1); Japanese Examined Patent Publication No. 51-6673 (JP S51-6673 B1 / US 3,597,449 A); Japanese Laid-Open Patent Publication No. 63-101378 (JP S63-101378 A / EP 0 261 572 A1); Japanese Laid-Open Patent Publication No. 6-256340 (JP H06-256340 A / DE 44 04 838 A1); and, Japanese Laid-Open Patent Publication No. 7-165753 (JP H07-165753 A / EP 0 657 447 A1).

As used herein, a "catalytic amount" means a sub-stoichiometric amount of catalyst relative to a reactant.

As used herein "solvents" are substances capable of dissolving another substance to form a uniform solution; during dissolution neither the solvent nor the dissolved substance undergoes a chemical change. Solvents may either be polar or non-polar.

Water, for use as a (co-)solvent or carrier herein, is intended to mean water of low solids content as would be understood by a person of ordinary skill in the art. The water may, for instance, be distilled water, demineralized water, deionized water, reverse osmosis water, boiler condensate water, or ultra-filtration water. Tap water may be tolerated in certain circumstances.

Hydroxyl (OH) values are measured according to Japan Industrial Standard (JIS) K-1557, 6.4.

The measurement of the solids content of materials shall be conducted in accordance with EPA Test Method 24 (40 CFR 60, Appendix A).

The molecular weights referred to in this specification can be measured with gel permeation chromatography (GPC) using polystyrene calibration standards, such as is done according to ASTM 3536. And molecular weight as given here means "number average molecular weight (Mn)" unless specifically stated otherwise.

All percentages, ratios and proportions used herein are given on a weight basis unless otherwise specified.

### Detailed Description of the Invention

As noted above, the present invention is primarily directed to an agent capable of reacting with a leuco dye upon heating, wherein said agent meets Formula (A-I): 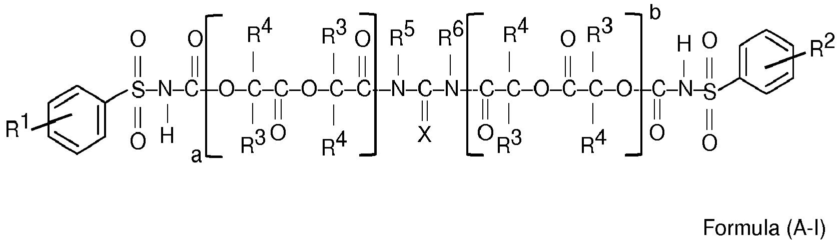 wherein:
R1 and R2 are independently a hydrogen atom, a C1-C6 alkyl group, a C1-C6 alkoxy group or a halogen atom;
R3, R4, R5 and R6 are independently a hydrogen atom, a C1-C6 alkyl group, a C3-C6 cycloalkyl group or a C2-C6 alkenyl group;
X is O, S or NH; and,
a and b are integer values meeting the conditions a ≥ 0, b ≥ 0 and (a+b) ≥ 1.

In producing a thermosensitive medium, in particular a thermal paper, it would be usual to form the colour developing layer thereof by application - to a suitable substrate - of an aqueous coating composition comprising a dispersed developer which reacts with said leuco dye upon heating; in the present invention that developer comprises the agent as defined above and further described herein below. The leuco dye of the colour developing layer may be provided within such an aqueous coating composition or may be applied independently to the substrate. Within such an aqueous dispersion, it is preferred that the average particle size of any dispersed agent is less than 20 microns, for example from 0.5 to 10 microns, as measured by dynamic light scattering.

### Reactive Agent

The reactive agent in accordance with the present invention and having Formula (A-I) is optimally formed in a two-stage process comprising:
1) In a first stage, reacting at a stoichiometric ratio of 1: (a+b):
   i) a compound of the formula 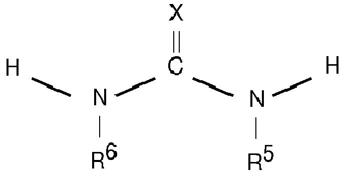 wherein:
      R5 and R6 are independently a hydrogen atom, a C1-C6 alkyl group, a C3-C6 cycloalkyl group or a C2-C6 alkenyl group; and,
      X is O, S or NH; and,
   ii) a cyclic ester of a hydroxycarboxylic acid having the formula 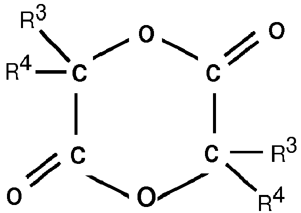 wherein:
      R3 and R4 are independently a hydrogen atom, a C1-C6 alkyl group, a C3-C6 cycloalkyl group or a C2-C6 alkenyl group,
   to thereby form an intermediate compound of Formula (A-II): 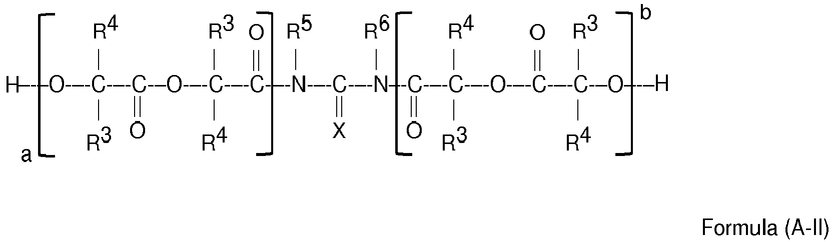
2) In a second stage, reacting said intermediate compound of Formula (A-II) with at least one sulfonyl isocyanate of Formula (A-III): 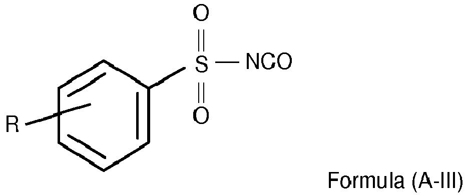 wherein:
   R is a hydrogen atom, a C1-C6 alkyl group, a C1-C6 alkoxy group or a halogen atom.

It will be recognized that a compound of Formula (A-II) might alternatively be prepared by grafting of a preformed oligomer, such as a pre-formed polylactide, onto the appropriate starter molecule, such as urea. In this embodiment, the polylactide could be derived from either lactide or lactic acid as both alternatives are established in the art. However, no further mention will be made of said embodiment and the two stage process will be described further below.

### First Stage 1)

As regards the reactants of said first stage of the process, it is preferred that: R3, R4, R5 and R6 as defined above are independently a hydrogen atom or a C1-C3 alkyl group; and, X is O. More preferably, R3 and R4 are independently a hydrogen atom or a methyl group and most preferably R3 is H and R4 is methyl. As illustrative first stage reactants, glycolide, lactide and urea might therefore be mentioned.

In the first stage of this process, polymeric blocks of unit lengths a and b may be formed by a ring-opening reaction or a ring opening polymerization of the cyclic ester using an appropriate ionic or nonionic catalyst, as described in Ring Opening Polymerization, Vol. I, pages 461-521, K. J. Ivin and T. Saegusa (1984). Known catalysts, which may be used alone or in combination, include but are not limited to: amine compounds or salts thereof with carboxylic acids, such as butylamine, octylamine, laurylamine, dibutylamines, monoethanolamines, diethanolamines, triethanolamine, diethylenetriamine, triethylenetetramine, oleylamines, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabi-cyclo-(5,4,0)-undecene-7 (DBU); tin 2-ethylhexanoate (tin octanoate); tin dichloride (SnCl₂); porphyrin aluminum complexes; (n-C₄H₉O)₄Al₂O₂Zn; composite metal cyanide; aqueous diethylzinc or diethylcadmium; aluminum triisopropoxide; titanium tetrabutoxide; zirconium tetrapropoxide; tributyltin methoxide; tetraphenyltin; lead oxide; zinc stearate; bismuth 2-ethylhexanoate; potassium alcoholate; antimony fluoride; and yttrium or lanthanide series rare earth metal based catalysts (coordination catalysts), such as described in U.S. Patent No. 5,028,667 (US 5,028,667 B1). In terms of yield, tin dichloride (SnCl₂) and tin 2-ethylhexanoate are particularly preferable.

There is no particular limitation on the amount of catalyst used but it will typically be 0.0001 to 5 parts by weight, and preferably from 0.05 to 1 part by weight, based on 100 parts by weight of the cyclic ester.

The ring-opening reaction or polymerization reaction can be performed at room temperature but is preferably performed with heating at a temperature of from 100 to 200 °C., or from 130 to 190 °C. If the temperature is lower than 100 °C., the reaction rate is unfavorably low. On the other hand, if the temperature is higher than 200 °C., the oligomer degradation rate is increased and low-molecular weight components can vaporize.

Importantly, the reaction should be performed under anhydrous conditions and in the absence of any further compounds having an active hydrogen atom. Exposure to atmospheric moisture may be avoided by providing the reaction vessel with an inert, dry gaseous blanket. Whilst dry nitrogen, helium and argon may be used as blanket gases, precaution should be used when common nitrogen gases are used as a blanket, because such nitrogen may not be dry enough on account of its susceptibility to moisture entrainment; the nitrogen may require an additional drying step before use herein.

The process pressure is not critical to the first-stage reaction. As such, the reaction can be run at subatmospheric, atmospheric, or super-atmospheric pressures but pressures at or above atmospheric pressure are preferred.

Furthermore, the reaction may be performed in solution or in the melt without a solvent. When used, suitable solvents for the reaction should be non-reactive, organic liquids capable of dissolving at least 1 wt.% and preferably over 10 wt.% of the compounds of Formula (A-II) at 25 °C.

The progress of the reaction can be monitored by known methods - for instance by analyzing monomer conversion using gas chromatography or by monitoring the product hydroxyl (OH) values - and the reaction stopped when desired. This aside, the reaction generally requires a time of 0.5 to 12 hours to reach completion, and more commonly from 1 to 6 hours.

Upon completion of the first stage reaction, it is facile to remove any solid, suspended compounds by, for example, filtration, crossflow filtration or centrifugation. Further, the first stage reaction product - of Formula (A-II) - may be worked up, using methods known in the art, to isolate and purify the product: for example, any solvent present may be removed by stripping at reduced pressure. That said, it is noted that there is no particular need to work up the first stage reaction product: the second reaction stage may proceed directly from the first stage.

### Second Stage 2)

The intermediate compound of Formula (A-II) and one or more compounds of Formula (A-III) are reacted in the second stage of the process. Preferably, a single compound of Formula (A-III) is reacted such that the resultant terminal groups of the reactive agent (Formula (A-I)) are the same. This second stage - nominally the preparation of a sulfonylurethane - is an addition reaction and not a polymerization reaction; therefore the molecular weights of the intermediate compound (Formula (A-II)) and of the or each compound of Formula (A-III) are determinative of the molecular weight of the reaction product, the compound of Formula (A-I).

Exemplary compounds of Formula (A-III) include phenylsulfonylisocyante, toluenesolylsulfonyl isocyanate, and chlorophenylsulfonyl isocyanate. Where non-hydrogen substituents (R) are present in the compounds of Formula (A-III), these are preferably para-substituents of the phenyl group. As such, it is particularly preferred that p-toluenesulfonylisocyanate is used as a reactant.

For completeness, processes for the preparation of aromatic sulfonyl isocyanates of the type suitable for the present invention and their chemical behavior are described inter alia in: H. Ulrich Chem. Rev. 65, pages 369-376 (1965); US Patent No. 2,666,787 (US 2,666,787 A); and, US Patent No. 3,484,466 (US 3,484,466 A).

The molar ratio of the reactants of Formula (A-II) and Formula (A-III) should be selected to ensure the complete conversion of the hydroxyl groups of Formula (A-II). Generally, the molar ratio of hydroxyl groups to sulfonyl isocyanate groups should be maintained in the range of from 1:1 to 1:0.8.

The second stage reaction is typically performed in organic solution and under anhydrous conditions. The intermediate compound of Formula (A-II) is dispersed in a suitable organic solvent and, under stirring, the sulfonyl isocyanate is added thereto either in pure form or in solution. Suitable organic solvents are those capable of dissolving at least 1 wt.% and preferably over 10 wt.% of the reaction product - the compounds of Formula (A-I) - at 25 °C. As non-liming examples, mention may be made of tetrahydrofuran, ethyl acetate, nbutyl acetate, tert-butyl acetate, methyl Cellosolve acetate, toluene, xylene, methylisobutyl ketone and methylethylketone (MEK).

The compound of Formula (A-III) may actually be sufficiently reactive towards to the hydroxyl functional, intermediate compound (Formula (A-II)) that the reaction need not occur either at a significantly elevated temperature or under catalysis. For instance, it is envisaged that the second stage reaction may be performed at a temperature of from 30 °C or 40 °C to 80 °C and either some cooling of the reaction vessel or the introduction of the reactants at a slow rate may in fact be needed to maintain such low temperatures given the exothermic nature of the reaction. That said, in certain circumstances it may be expedient to employ one or more conventional catalysts which are known to accelerate the isocyanate-hydroxyl reaction. When employed, there is again no intended limitation on the amount of catalyst which may be used, but it will typically be 0.0001 to 5 parts by weight, and preferably from 0.05 to 1 part by weight, based on 100 parts by weight of hydroxyl functional, intermediate compound (Formula (A-II).

In principle, any compound that can catalyze the reaction of a hydroxyl group and an isocyanato group to form a urethane bond can be used. And examples thereof include: tin carboxylates; tin alkoxides; tin oxides; reaction products between dibutyltin oxides and phthalic acid esters; dibutyltin bisacetylacetonate; titanates, such as tetrabutyl titanate and tetrapropyl titanate; organoaluminum compounds such as aluminum trisacetylacetonate, aluminum trisethylacetoacetate, and diisopropoxyaluminum ethylacetoacetate; chelate compounds such as zirconium tetraacetylacetonate and titanium tetraacetylacetonate; lead octanoate; amine compounds or salts thereof with carboxylic acids, such as butylamine, octylamine, laurylamine, dibutylamines, monoethanolamines, diethanolamines, triethanolamine, diethylenetriamine, triethylenetetramine, oleylamines, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo-(5,4,0)-undecene-7 (DBU); and, aliphatic carboxylate salts or acetylacetonates of potassium, iron, indium, zinc, bismuth, or copper.

Where one elects to use a catalyst, a preference may be noted for organic tin compounds. An illustrative but non-limiting list of suitable tin compounds include: tin(II) and tin(IV) salts of carboxylic acids, such as tin(II) acetate, tin (II) 2-ethylhexanoate (tin octanoate), tin(II) oleate, tin(II) laurate, dibutyl tin diacetate, dibutyl tin dilaurate, dibutyl tin maleate, dioctyl tin diacetate, dibutyl tin di-2-ethyl hexanoate, tributyl tin acetate and triphenyl tin acetate; tin(IV) alkoxides, such as tributyl tin methoxide, tributyl tin ethoxide, dibutyl tin dimethoxide, dibutyl tin diethoxide and dibutyl tin dibutoxide; distannoxanes, such as hexabutyl distannoxane (bis(tri-n-butyl tin)-oxide); distannoxanes containing alkoxy or carboxy substituents such as tetrabutyl-1,3-diethoxy-distannoxane, tetrabutyl-1,3-dimethoxy distannoxane and tetrabutyl-1,3-diacetoxydistannoxane; and, stannosiloxanes as described, for example, in DE-AS 1,099,743 (DE 1 099 743 A) and DE-AS 1,111,378 (DE 1 111 378 B) in particular dibutyl tin-di-(trimethyl silyloxide), tetrabutyl-1,3-di-(trimethyl silyloxy)-distannoxane, tetra-(dibutyl-acetoxy tin oxy)-silane and tetrabutyl3-ethoxy-1-(triethoxy siloxy)-distannoxane.

In a particularly interesting embodiment, tin octanoate may be employed as the catalyst of both the first and second reaction stages. This allows for a "one-pot synthesis", wherein the first and second stages can be performed sequentially without the need to remove any first-stage catalyst from the intermediate product.

The progress of the second stage reaction can be monitored by known methods - again including the monitoring of reactant conversion by gas chromatography and by hydroxyl (OH) value measurement - and the reaction stopped upon completion. In practice, the reaction generally requires a time of 0.1 to 4 hours to reach completion and more commonly from 0.2 to 2 hours.

The output of the second reaction stage may be worked up, using methods known in the art, to isolate and purify the compounds of Formula (A-I): mention in this regard may be made of extraction, evaporation, distillation and chromatography as suitable techniques.

For further utility in the present invention, the compound of Formula (A-I) is dispersed in an aqueous medium in the presence or absence of a leuco dye.

### Leuco Dyes

Leuco dyes, included as the so-called "colour formers" in the aqueous coating compositions and thermal sensitive recording materials of this invention, are colourless or light coloured basic substances which become coloured when oxidized by acidic substances. Exemplary leuco dyes that can be used herein, either alone or in combination, include: triphenylmethanephthalide leuco compounds; triallylmethane leuco compounds; fluoran leuco compounds; phenothiazine leuco compounds; thiofluoran leuco compounds; xanthene leuco compounds; indophthalyl leuco compounds; spiropyran leuco compounds; azaphthalide leuco compounds; couromeno-pyrazole leuco compounds; methine leuco compounds; rhodamineanilino-lactam leuco compounds; rhodaminelactam leuco compounds; quinazoline leuco compounds; diazaxanthene leuco compounds; and, bis-lactone leuco compounds.

In an embodiment, the aqueous coating composition comprises a leuco base of a triphenylmethane dye as represented by Formula L1: 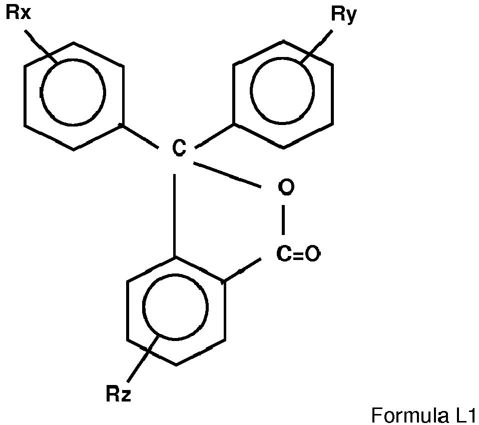 wherein Rx, Ry, and Rz are independently selected from the group consisting of hydrogen, hydroxyl, halogen, C1-C6 alkyl, nitro and aryl. Specific examples of dyes meeting Formula L1 include: 3,3-bis(pdimethylaminophenyl)-phthalide, 3,3-bis(p-dimethylaminophenyl)-6-dimethylaminophthalide (Crystal Violet Lactone), 3,3-bis(p-dimethylaminophenyl)-6-diethylaminophthalide, 3,3-bis(p-dimethylaminophenyl)-5 6-chlorophthalide, and 3,3-bis(p-dibutylaminophenyl)-phthalide.

In an alternative embodiment, the aqueous coating composition comprises a leuco dye comprises a compound represented by Formula L2: 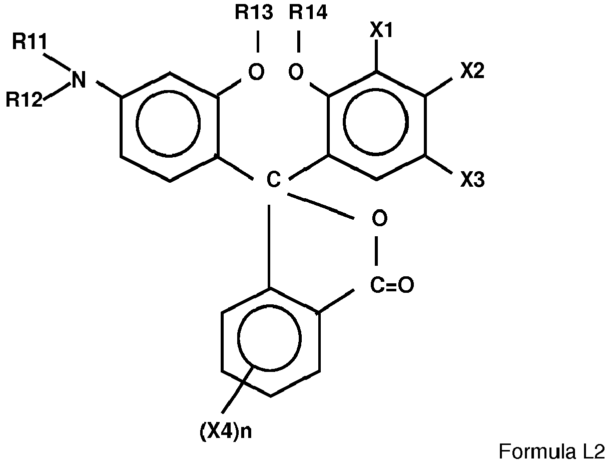 wherein:
either R11 and R12 are independently selected from the group consisting of hydrogen, C1-C6 alkyl, substituted phenyl, unsubstituted phenyl, cyanoethyl and, R-halogenated ethyl,
or R11 and R12 in combination form a cyclic structure and represent --(CH2--)4, (--CH2--)5;
at least one of R13 and R14 is hydrogen and the other is hydrogen, C1-C6 alkyl, aralkyl, amyl, or phenyl;
X1, X2 and X3 each independently selected from the group consisting of hydrogen, C1-C6 alkyl, halogen, halogenated methyl, nitro, amino and substituted 5 amino; and,
X4 represents hydrogen, C1-C6 alkyl or C1-C6 alkoxy and n is an integer of from 0 to 4.

Specific examples of lactone compounds meeting Formula L2 are: 3-(2'-hydroxy-4'-dimethylaminophenyl)-3-(2' -methoxy-5'-chlorophenyl)phthalide, 3-(2'-hydroxy-4'-dimethylaminophenyl)-3-(2'-methoxy-5'-nitrophenylphthalide, 3-(2'-hydroxy-4'-diethylaminophenyl)-3-(2'-methoxy-5'-methylphenyl)phthalide, and 3-(2'-methoxy-10 4'-dimethylaminophenyl)-3-(2'-hydroxy-4'-chloro-5'-methylphenyl)-phthalide.

In a preferred embodiment, the aqueous coating composition comprises a fluoran leuco dye. Examples of such dyes include: 3-diethylamino-6-methyl-7-chlorofluoran; 3-pyrrolidino-6-methyl-7-anilinofluoran; and, 2-[3,6-bis(diethylamino)-9-(0-chloroanilino)xanthylbenzoic acid lactam]. Equally, the dye may be a leuco base of a fluoran dye as represented by Formula L3: 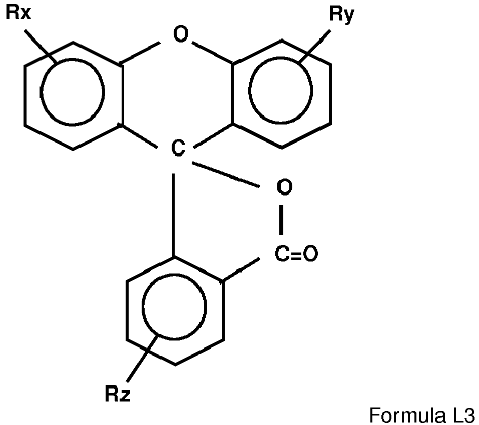 wherein
Rx, Ry, and Rz are independently selected from the group consisting of hydrogen, hydroxyl, halogen, C1-C6 alkyl, nitro and aryl.

As specific examples of leuco dyes conforming to Formula L3 might be mentioned 3-cyclohexylamino-6-chlorofluoran, 3-(N-N-diethylamino)-5-methyl-7-(N,N-dibenzylamino) fluoran, 3-dimethylamino-5,7-dimethylfluoran and 3-diethylamino-7-methylfluoran.

### Coating Compositions

The amount of said colour developer included in the aqueous coating compositions is preferably selected so that the resultant thermo-sensitive medium comprises the compound of Formula (A-I) in an amount of from 0.5 and 10 parts by weight, relative to 1 part by weight of a basic leuco dye.

The colour developer may comprise or consist of the compound of Formula (A-I). By this it is meant that the present invention does not preclude the colour developer - and thereby the resultant colour developing layer of the thermosensitive medium - from comprising one or more further compounds which are supplementary to the above defined agent but which can also oxidize the constituent leuco dyes and change the colour thereof.

Any co-agent should typically melt at a temperature of from 50 °C to 250 °C and be sparingly soluble in water. Suitable co-agents may be selected from the group consisting of: benzyl paraben; mono- and dihydroxy diphenyl sulfones; acidic clays; phenolic resins; and, salicylic acids and salicylates of lead, aluminum, magnesium, nickel or, preferably zinc. And specific examples of co-agents include: 4,4'-isopropylenediphenol (bisphenol A); p-tert-butylphenol, 2-4-dinitrophenol; 3,4-dichlorophenol; p-phenylphenol; 4,4-cyclohexylidenediphenol; and, 3-tert-butylsalicylic acid, 3,5-tert-butysalicylic acid, 5-a-methylbenzylsalicylic acid and zinc, lead, aluminum, magnesium or nickel salts thereof.

The amount of co-agent included in the colour developer aqueous coating composition is preferably selected so that the resultant thermosensitive medium comprises from 0.01 to 5 parts by weight thereof, relative to 1 part by weight of basic leuco dye. Whilst the use of bisphenol compounds as co-agent(s) is not precluded in the present invention, it is preferred that the thermosensitive medium comprises less than 0.1 parts by weight of such compounds, relative to 1 part by weight of basic leuco dye.

### Methods

In accordance with a further aspect of the invention, there is provided a method of producing a thermosensitive recording medium comprising the steps of: a) providing a preferably planar substrate; b) applying an aqueous coating composition to said substrate, said aqueous coating composition comprising a leuco dye and a dispersed developer which reacts with said leuco dye upon heating; and, c) forming a coating layer by drying the applied aqueous coating composition at a temperature below the minimum reaction temperature of the developer and the leuco dye, wherein said colour developer comprises the agent as defined hereinabove. Further, said method may be characterized in that the applied coating composition in one embodiment of the invention has a solids content of from 35 to 50 wt.%. In a further embodiment of the invention the said method may be characterized in that the applied coating composition has a solids content of from 20 to 50 wt.%.

The shape, structure, size and material of the substrate to be coated will be selected based on what is appropriate for the intended purpose of the thermo-sensitive medium; no particular limitation is intended here. Exemplary shapes of the substrate include plates and sheets and, moreover, the substrate may have a single-layer or multi-layer structure. That aside, it is advised that the base layer (2) of the substrate can significantly affect the final characteristics of a thermosensitive medium, such as a thermal paper, and thereby must be carefully chosen on the basis of its optical and mechanical properties.

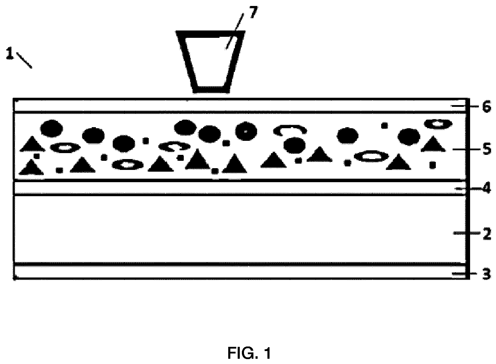

Conventionally the base layer (2) of the substrate will be selected from the group consisting of: paper, including synthetic paper; cardboard; other fibrous webs; textile materials; and, synthetic resin films. For most applications, the thickness of the base layer (2) of the substrate will be in the range from 20 to 250 microns. As is known the art, the structural properties of the base layer (2) can be modified by the provision of a backcoat (3) as illustrated in Figure 1.

The aqueous compositions may be directly coated onto the base layer (2) of the substrate. However, the presence of an intermediate layer (4) is not precluded and indeed may be preferable in some circumstances.

The aqueous coating compositions are liquid at their application temperature, said temperature typically being from 20 °C to 50 °C. The liquid might have a corresponding viscosity of from 2,000 to 70,000 centipoises, preferably from 3,000 to 30,000 cP as determined at application temperature using a Brookfield Thermosel Viscometer Model DV-I using a number 27 spindle. The unit centipoise ("cP") is one hundredth of a poise, or one millipascal-second (mPa·s) in SI units (1 cP = 10⁻³ Pa·s = 1 mPa·s); next to the unit "cP", sometimes the abbreviations "cps", "cp", and "cPs" are used in the art. The sensitivity of the substrate and, more particularly, of the coating composition to a given temperature may determine which application temperature is applicable. Such physical characteristics as the viscosity and rate of set of the compositions may be varied to accommodate such application conditions.

Illustrative techniques for the application of the aqueous coating composition to the substrate, in particular for its application in the form of a continuous surface film, include but are not limited to: roll coating; spray coating; T-die coating; knife coating; comma coating; curtain coating; dip coating; and, spin coating. The composition might also be applied by dispensing, ink-jet printing, screen printing or offset printing where more localized application of the coating composition is required or where application is required in a variety of continuous or intermittent forms such as a point, line, triangle, square, circle or arc.

The coated substrate is then dried, typically using an air dryer, with close control of the temperature and any air flow, given that the coating is sensitive to heat. The substrate may then be over-coated and/or finished by calendaring, cutting, sheeting and the like. It is quite typical for the colour developing layer (5) to be wholly or partially coated with a protective layer (6) which can protect this recording layer from organic solvents, oils, fats, water, plasticizers and the like.

The basis weight of the colour developing layer (5) is typically from 2 g/m² to 8 g/m², for example from 2 g/m² to 5.0 g/m².

### Adjunct Compounds and Materials

The thermosensitive medium of the present invention may further comprise one or more of: a sensitizer; a lubricant; a binder; a filler; a pigment; a stabilizer; a dispersant; a defoamer; a flow modifier; and, an insolubiliser. These adjunct materials may be included in the above defined aqueous coating compositions and thereby be included in the colour developing layer: it is preferred, for instance, that the colour developing layer further comprises a sensitizer. Alternatively or additionally these adjunct materials may be included in supplementary layers of the thermosensitive medium: this may be particularly appropriate for binders and pigments, for example. For completeness, it is noted that the inclusion of one of these adjunct materials in the colour developing layer (5) does not preclude the further addition of that adjunct material in such supplementary layers.

Sensitizers - sometimes referred to as thermo-sensitivity promoter agents - may be used in the coating compositions and media of the present invention to ensure a good colour density is attained. Without being bound by theory, it is considered that certain sensitizers can assist in the colour forming reaction by forming a eutectic compound with one or more of the colour forming compounds: this brings down the melting point of these compounds and thereby depresses the temperature at which the colour forming reaction takes place.

Suitable sensitizers are typically selected from the group consisting of: fatty acid amides, preferably C12-C24 fatty acid amides; methylol compounds of said fatty acid amides; p-hydroxybenzoate acid esters, preferably C1-C6 alkyl p-hydroxybenzoates; and, mixtures thereof. As specific examples of sensitizers might be mentioned: stearic acid amide; linolenic acid amide; lauric acid amide, myristic acid amide; methylenebis (stearamide); ethylenebis (stearamide); methyl p-hydroxybenzoate; n-propyl p-hydroxybenzoate; isopropyl p-hydroxybenzoate; and, benzyl p-hydroxybenzoate.

The amount of sensitizer used is preferably selected so that the thermosensitive medium comprises from 0.5 to 10 parts by weight relative to 1 part by weight of a basic leuco dye.

Lubricants are often added to a thermosensitive medium to ensure that thermal heads contacting the medium are not abraded or worn down. Non-limiting examples of suitable lubricants are: linseed oil; tung oil; paraffin wax; oxidized paraffin wax; polyethylene wax; chlorinated paraffin wax; castor wax; metal salts of higher fatty acids, such as calcium stearate and zinc stearate; and, stearic acid amide.

Binders can often constitute an important ingredient of the aqueous coating composition used to form the colour developing layer: the inclusion of a binder may be determinative of the viscosity, rheology, water release properties and set time for the aqueous coating composition. Furthermore, binders may be important to the structural integrity of the overall thermosensitive medium, particularly where pigments and/or fillers are also included therein.

The binders may be water-soluble, emulsion or latex polymers. Without being limited thereto, water soluble binders considered suitable for the coating compositions and thermosensitive recording media of the present invention include: polyvinyl alcohol; starch and starch derivatives; cellulose derivatives, such as methoxycellulose, hydroxyethylcellulose, carboxymethylcellulose, methylcellulose, and ethylcellulose; sodium salts of polyacrylic acid; polyvinylpyrrolidone; acrylamide-acrylate copolymer; acrylamide-acrylatemethacrylic acid copolymer; alkali salts of styrene-maleic anhydride copolymer; alkali salts of isobutylenemaleic anhydride copolymer; polyacrylamide; sodium alginate; gelatin, and, casein. Exemplary, but nonlimiting, emulsion polymers for use as binders in the present invention include: polyvinyl acetate; polyurethane; polyacrylic acid; polyacrylate; vinyl chloride-vinyl acetate copolymer; polybuthylmethacrylate; and, ethylene-vinyl acetate copolymer. And exemplary latex polymers include styrene-butadiene copolymers and styrene-butadiene-acrylate copolymers.

Any fillers and pigments used in the thermosensitive medium should conventionally be finely pulverized. In one embodiment of the invention it is preferred that such fillers and pigments be characterized by, independently or a combination of: a mean particle diameter of less than 13 µm, preferably less than 8 µm; a maximum specific surface area of 200 m²/g; and/or, an oil absorption of at least 150 ml/100 g, preferably at least 300 ml/100 g. It is preferred that such fillers and pigments be characterized by: a mean particle diameter of less than 10 µm, preferably less than 5 µm; a maximum specific surface area of 150 m²/g; and/or, an oil absorption of at least 150 ml/100 g. Whilst a skilled person may be aware of further suitable inorganic and/or organic fillers, typical examples include: calcium carbonate; silica; alumina; magnesia; kaolin; talc; diatomaceous earth; barium sulfate; aluminum stearate; and, mixtures thereof.

The thermo-sensitive medium should preferably contain, in total, from 0.5 to 10 parts by weight of particulate fillers and pigments relative to 1 part by weight of basic leuco dye.

In a particularly preferred embodiment, the heat-sensitive recording material according to the invention has a pigment-containing intermediate layer (4) arranged between the substrate and the heat-sensitive recording layer. On one hand, an intermediate layer of this type can positively contribute to the levelling of the surface to be coated so that the required amount of coating composition to be applied for the heat-sensitive recording layer is reduced. For this reason, levelling coating devices - such as roller coating units, knife coating units, and (roll) doctor coating units - are preferable for applying the pigmented intermediate layer. On the other hand, the pigments of this intermediate layer can absorb any wax constituents of the heat-sensitive recording layer which are liquefied by the heating effect during induced recording. The basis weight of such a pigment containing intermediate layer is suitably from 5 g/m² to 20 g/m², preferably from 5 g/m² to 10 g/m².

### Illustrative Embodiment

In an exemplary and non-limiting embodiment of the present invention, there is provided a thermosensitive recording medium (1) comprising:
a planar, paper base layer (2) having a thickness of from 20 to 250 microns; and,
a colour developing layer (5) having a basis weight of from 2 g/m² to 8 g/m² and containing a fluoran leuco dye and a developer which reacts with said fluoro leuco dye upon heating to form a colour layer, wherein said developer is characterized in that it comprises an agent meeting Formula (A-I): 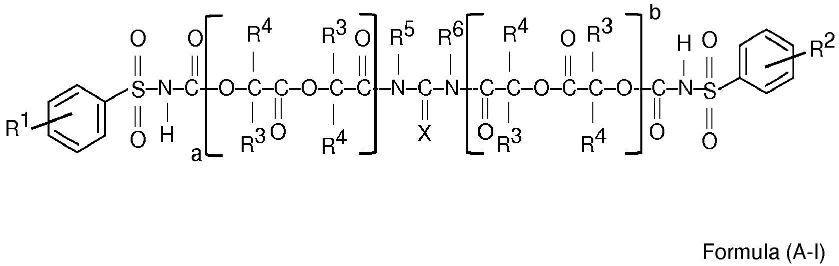 wherein:
   R1 and R2 are independently a hydrogen atom or a C1-C3 alkyl group disposed as a parasubstituent of the phenyl group;
   R3 and R4 are independently a hydrogen atom or a methyl group;
   R5 and R6 are independently a hydrogen atom or a C1-C3 alkyl group;
   X is O; and,
   a and b are integer values wherein 1 ≤ a ≤ 10 and 1 ≤ b ≤ 10.

### Example

The present invention is further defined in the following example. This example, while indicating a preferred embodiment of the invention, is presented by way of illustration only.

**Materials:**

| | |
|---|---|
| Urea | |
| Puralact B3: | Available from Corbion Purac B.V. |
| Methyl ethyl ketone (MEK) | |
| p-toluenesulfonylisocyanate | |

Urea and Puralact B3 were loaded into a reaction vessel under a nitrogen atmosphere. The vessel was heated to 150 °C and 100 ppm of tin octoate catalyst was added thereto. The temperature of the vessel was then raised to 180 °C and the reaction allowed to proceed for approximately 6 hours. The vessel was cooled to 60 °C, MEK was added thereto and then p-toluenesulfonylisocyanate was added slowly to the reaction mixture over time to ensure the reaction temperature remained between 60 and 70 °C. Following the addition of the p-toluenesulfonylisocyanate, the reaction was allowed to proceed under stirring for a further 1 hour. The MEK was then removed under vacuum.

It will be apparent to those skilled in the art, upon consideration of the specification, that various modifications can be made in the disclosed embodiments without departing from the scope of the invention. It is therefore intended that the embodiments and examples be considered illustrative only, with the true scope of the invention being indicated by the Claims.

## Claims

1. An agent capable of reacting with a leuco dye upon heating, wherein said agent meets Formula (A-I): 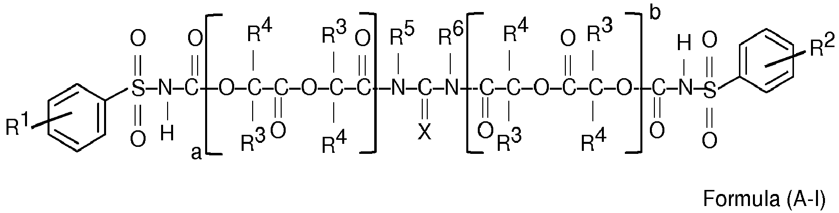 wherein:
R1 and R2 are independently a hydrogen atom, a C1-C6 alkyl group, a C1-C6 alkoxy group or a halogen atom;
R3, R4, R5 and R6 are independently a hydrogen atom, a C1-C6 alkyl group, a C3-C6 cycloalkyl group or a C2-C6 alkenyl group;
X is O, S or NH; and,
a and b are integer values meeting the conditions a ≥ 0, b ≥ 0 and (a+b) ≥ 1.

2. The agent according to Claim 1, wherein R1, R2, R3, R4, R5 and R6 are independently a hydrogen atom or a C1-C3 alkyl group.

3. The agent according to Claim 1 or Claim 2, wherein R3 and R4 are independently a hydrogen atom or a methyl group.

4. The agent according to Claim 3, wherein R3 is H and R4 is methyl.

5. The agent according to any one of Claims 1 to 4, wherein X is O.

6. The agent according to any one of Claims 1 to 5, wherein R1 and R2 are both methyl and are para-substituents of the phenyl group.

7. The agent according to any one of Claims 1 to 6, wherein 1 ≤ a ≤ 10 and 1 ≤ b ≤ 10.

8. A thermosensitive recording medium having a colour developing layer comprising:
a leuco dye; and,
a colour developer which reacts with said leuco dye upon heating to form a colour layer, wherein said colour developer comprises an agent as defined in any one of Claims 1 to 7.

9. The thermosensitive medium according to Claim 8, wherein said leuco dye is selected from the group consisting of: triphenylmethanephthalide leuco compounds; triallylmethane leuco compounds; fluoran leuco compounds; phenothiazine leuco compounds; thiofluoran leuco compounds; xanthene leuco compounds; indophthalyl leuco compounds; spiropyran leuco compounds; azaphthalide leuco compounds; couromenopyrazole leuco compounds; methine leuco compounds; rhodamineanilino-lactam leuco compounds; rhodaminelactam leuco compounds; quinazoline leuco compounds; diazaxanthene leuco compounds; bislactone leuco compounds; and, mixtures thereof.

10. The thermosensitive medium according to Claim 9 in which the colour developing layer comprises a fluoran leuco dye.

11. The thermosensitive medium according to any one of Claims 8 to 10, wherein said colour developing layer comprises a co-developer selected from the group consisting of: benzyl paraben; mono- and dihydroxy diphenyl sulfones; acidic clays; phenolic resins; and, zinc salicylates.

12. The thermosensitive medium according to any one of Claims 8 to 11, wherein said colour developing layer further comprises one or more of:
i) a sensitizer;
ii) a binder;
i) a pigment;
ii) a stabilizer;
iii) a dispersant;
iv) a defoamer;
v) a flow modifier; and,
vi) an insolubilizer.

13. A method of producing a thermo-sensitive recording medium comprising the steps of:
a) providing a preferably planar substrate;
b) applying an aqueous coating composition to said substrate, said aqueous coating composition comprising a leuco dye and a dispersed colour developer which reacts with said leuco dye upon heating; and,
c) forming a coating layer by drying the applied aqueous coating composition at a temperature below the minimum reaction temperature of the developer and the leuco dye, wherein said colour developer comprises an agent as defined in any one of Claims 1 to 7.

14. A compound meeting Formula (A-II): 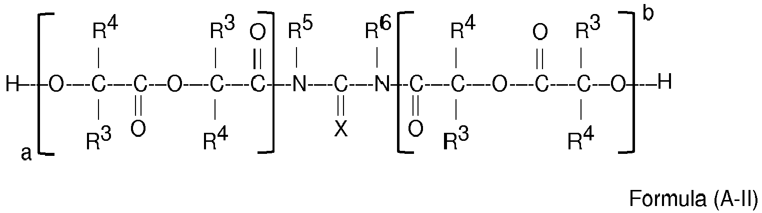 wherein:
R3, R4, R5 and R6 are independently a hydrogen atom, a C1-C6 alkyl group, a C3-C6 cycloalkyl group or a C2-C6 alkenyl group;
X is O, S or NH; and,
a and b are integer values meeting the conditions a ≥ 0, b ≥ 0 and (a+b) ≥ 1.

15. A method of preparing the compound as defined in Claim 14, said method comprising reacting:
i) a compound of the Formula 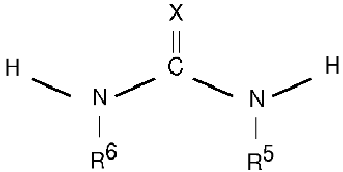 wherein:
R5 and R6 are independently a hydrogen atom, a C1-C6 alkyl group, a C3-C6 cycloalkyl group or a C2-C6 alkenyl group; and,
X is O, S or NH; and,
ii) a cyclic ester of a hydroxycarboxylic acid having the Formula 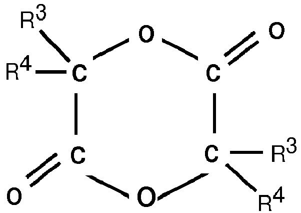 wherein:
R3 and R4 are independently a hydrogen atom, a C1-C6 alkyl group, a C3-C6 cycloalkyl group or a C2-C6 alkenyl group.

16. A method for producing the agent as defined in any one of Claims 1 to 7, said method comprising the steps of:
a) providing a compound as defined in Claim 14; and,
b) reacting said compound with at least one sulfonyl isocyanate of Formula (A-III): 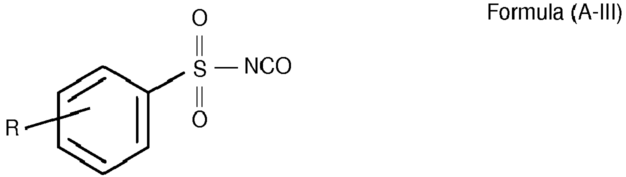 wherein: R is a hydrogen atom, a C1-C6 alkyl group, a C1-C6 alkoxy group or a halogen atom.
